# EUROPEAN PATENT SPECIFICATION

(11) **EP 4 105 568 B1**
(45) Date of publication and mention of the grant of the patent: **03.09.2025**
(21) Application number: 22175711.5
(22) Date of filing: 27.05.2022
(51) Int. Cl.: F24F 11/30, F24F 11/38, F24F 11/47, A47F 3/04

(54) **DEGRADATION DETERMINATION METHOD AND DEVICE**
VERFAHREN UND VORRICHTUNG ZUR ABBAUBESTIMMUNG
PROCÉDÉ ET DISPOSITIF DE DÉTERMINATION DE DÉGRADATION

(30) Priority: 14.06.2021 JP 2021098790
(43) Date of publication of application: 21.12.2022
(73) Proprietor: Panasonic Intellectual Property Management Co., Ltd., Osaka-shi, Osaka 540-6207 (JP)
(72) Inventor: MIYAKE, Gaku, Osaka, 540-6207 (JP)
(74) Representative: Novagraaf International SA

(56) References cited:
- JP-A- 2005 291 642
- JP-A- 2009 020 721
- JP-A- 2012 117 752
- US-A1- 2021 008 484

## Description

### BACKGROUND

### 1. Technical Field

The present invention relates to a degradation determination method and a degradation determination device for a freezing and refrigeration facility that cools an inside of a box-shaped housing. More specifically, the present invention relates to a degradation determination method and device for determining degradation of a facility based on power consumption amount data of a freezing and refrigeration facility and temperature data outside the facility.

### 2. Description of the Related Art

The document JP2005291642 discloses a performance deterioration evaluation method and a system in relation thereto. Examples of a facility that cools a certain target space and controls a temperature of the target space to be constant include a freezing and refrigeration facility and an air conditioning facility. In such a facility, it is known that power consumption increases due to aging degradation of the facility. As the power consumption increases, the electricity charges borne by a user of the facility increase. From the viewpoint of reduction in electricity charges, it is important to grasp a state of aging degradation of the facility also in order to consider maintenance or replacement of the facility.

Therefore, it is known to perform degradation determination of a facility on the basis of an operation status of the facility (see PTL 1).

Fig. 7 illustrates degradation determination device 101 described in PTL 1.

Degradation determination device 101 includes power consumption amount holding unit 111, first change curve change rate calculation unit 112, second change curve change rate calculation unit 113, reference data setting unit 114, and degradation degree calculation unit 115. First change curve change rate calculation unit 112 calculates a change rate between predetermined times for a first change curve that is a change curve of a reference power consumption amount of an air conditioner acquired for each predetermined time. Second change curve change rate calculation unit 113 calculates a change rate between predetermined times for a second change curve that is a change curve of a determination power consumption amount of the air conditioner acquired at each predetermined time. Reference data setting unit 114 acquires a curve having a difference from the second change curve within a predetermined range among the first change curves based on a change rate between the predetermined times, and sets a reference power consumption amount having the first change curve as a reference data. Degradation degree calculation unit 115 calculates a degree of degradation of the air conditioner based on a difference between the reference data and the determination power consumption amount.

### Citation List

### Patent Literature

PTL 1: Unexamined Japanese Patent Publication No. 2009-20721

### SUMMARY

A degradation determination method according to the present invention is set out in claim 1.

A degradation determination device according to the present invention is set out in claim 5.

### BRIEF DESCRIPTION OF THE DRAWINGS

Fig. 1 is an overall configuration diagram of a freezing and refrigeration system according to a first exemplary embodiment of the present disclosure;
Fig. 2 is a flowchart illustrating a flow of processing of a degradation determination device according to the first exemplary embodiment of the present disclosure;
Fig. 3 is an explanatory diagram of transition of power consumption of the freezing and refrigeration system according to the first exemplary embodiment of the present disclosure;
Fig. 4 is an explanatory diagram of processing contents of the degradation determination device according to the first exemplary embodiment of the present disclosure;
Fig. 5 is an overall configuration diagram of a freezing and refrigeration system according to a second exemplary embodiment of the present disclosure;
Fig. 6 is an overall configuration diagram of a freezing and refrigeration system according to a third exemplary embodiment of the present disclosure; and

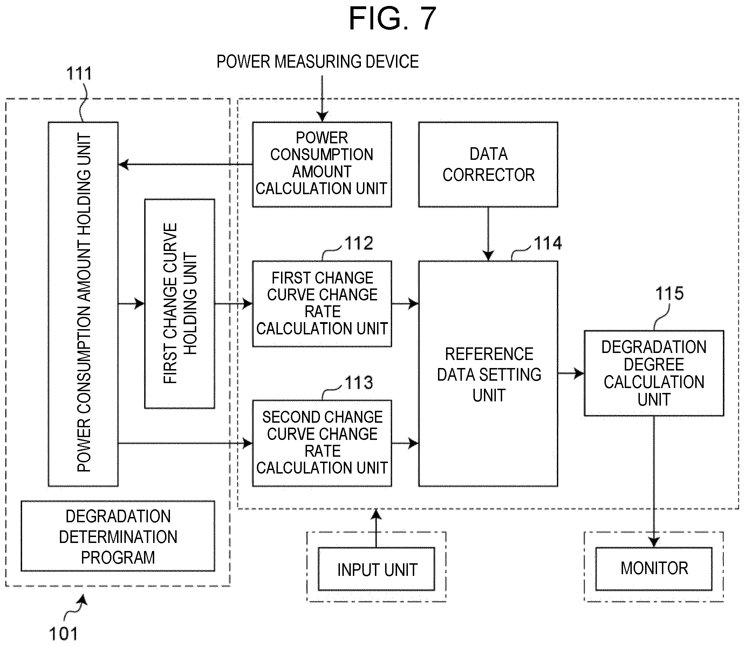

Fig. 7 is an overall configuration diagram of a conventional degradation determination device.

### DETAILED DESCRIPTIONS

In the conventional degradation determination method, the influence of an outside air temperature is taken into consideration, but other disturbances may be greatly received. In such a case, a degradation degree of a cooling facility cannot be correctly determined. For example, in a freezing and refrigeration facility, a temperature in the facility rises due to the opening of a door as an example of the disturbance, and the power consumption increases in order to temporarily cool an inside of the cooling facility. In such a case, even if the freezing and refrigeration facility is not degraded over time, the power consumption increases. Therefore, in the degradation determination method described in PTL 1, there is a possibility that it is erroneously determined that the freezing and refrigeration facility is degraded.

In view of such a point, an object of the present invention is to provide a degradation determination method and device capable of correctly determining degradation of the cooling facility while excluding an increase in power consumption due to the influence of disturbance that changes a temperature inside a box-shaped housing.

### [First exemplary embodiment]

Hereinafter, degradation determination devices 1, 1B, 1C according to exemplary embodiments of the present disclosure will be described in detail with reference to the drawings. In the drawings, the same or corresponding parts are denoted by the same reference marks, and description thereof will not be repeated. Note that, for ease of explanation, in the drawings referred to below, the configuration is simplified or schematically illustrated, and some constituent members are omitted.

### [Configuration]

First, a configuration of degradation determination device 1 according to a first exemplary embodiment will be described.

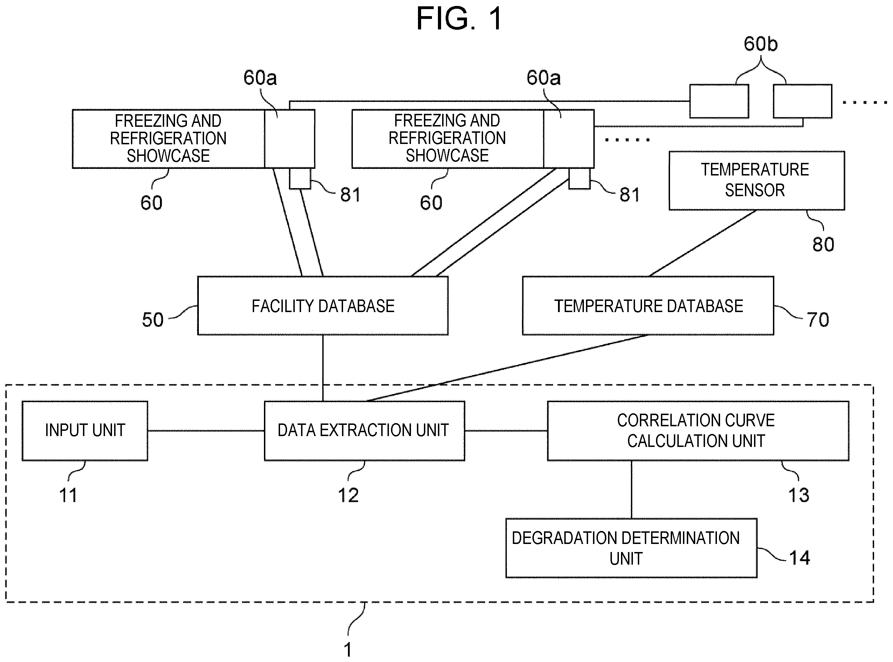

Fig. 1 is a schematic diagram illustrating a configuration of degradation determination device 1 according to the first exemplary embodiment of the present disclosure. In the first exemplary embodiment, as an example, a case will be described in which degradation determination device 1 determines degradation of a cooling facility of separately installed one or a plurality of freezing and refrigeration showcases 60 in which an outdoor unit and an indoor unit are installed in different places, for example, freezing and refrigeration facilities 60a introduced into a food store such as a food supermarket or a convenience store. In the degradation determination, when there are a plurality of facilities 60a, determination processing such as data acquisition, extraction, calculation, and determination is performed for each of facilities 60a. Each of freezing and refrigeration showcases 60 is an example of a box-shaped housing which is a cooling chamber.

Degradation determination device 1 includes at least data extraction unit 12, correlation curve calculation unit 13, and degradation determination unit 14. As an example, degradation determination device 1 is disposed in freezing and refrigeration facility 60a.

Data extraction unit 12 extracts, from a first data set including a power consumption amount of facility 60a and an ambient temperature of heat exchanger 60b that discharges heat to an outside of facility 60a acquired at each predetermined time interval or at each predetermined time, data in an operation mode in which facility 60a is operated in an operation state that requires less power consumption than usual as degradation determination reference data before degradation determination, and extracts, as determination data, data in the operation mode in which facility 60a is operated in the operation state that requires less power consumption than usual.

Here, the power consumption amount of facility 60a acquired every predetermined time interval (for example, 30 minutes) or every predetermined time (1:00, 2:00, 3:00,..., 23:00, 24:00) is measured and acquired by power meter 81 attached to facility 60a, and is stored together with the measurement time in facility database 50 in facility 60a, for example. That is, in facility database 50, the power consumption amount of facility 60a of freezing and refrigeration showcase 60 at every predetermined time interval or every predetermined time measured by power meter 81, and the measurement time are stored as data. Further, the state of the operation mode such as a normal operation, an energy-saving operation, or a power operation (for example, an operation performed at maximum power for quick cooling) at the measurement time of facility 60a is also stored in facility database 50.

An ambient temperature of heat exchanger 60b that discharges heat to an outside of facility 60a is measured and acquired by temperature sensor 80 disposed around heat exchanger 60b, and is stored in temperature database 70. The ambient temperature may be constantly measured, or may be measured every predetermined time interval, every predetermined time, or every measurement time described above. In temperature database 70, the ambient temperature of heat exchanger 60b that discharges heat to the outside of freezing and refrigeration showcase 60, that is, the temperature around the outdoor unit, measured by temperature sensor 80 at every predetermined time interval or at every predetermined time, as an example, is stored.

As will be described in detail later, correlation curve calculation unit 13 calculates a first correlation curve indicating a correlation between the power consumption amount and the ambient temperature from the power consumption amount and the ambient temperature of the degradation determination reference data extracted by data extraction unit 12, respectively, and calculates a second correlation curve indicating a correlation between the power consumption amount and the ambient temperature from the power consumption amount and the ambient temperature of the determination data.

As will be described in detail later, degradation determination unit 14 receives the first correlation curve and the second correlation curve from correlation curve calculation unit 13, and determines degradation of facility 60a based on a difference between the first correlation curve and the second correlation curve.

Degradation determination device 1 may further include facility database 50 and temperature database 70, or all or a part of these databases may be provided outside degradation determination device 1 so as to be acquired in degradation determination device 1 via a network or the like.

As an example of degradation determination device 1, degradation determination device 1 functions as a device that determines degradation of facility 60a of freezing and refrigeration showcase 60 using correlation curve calculation unit 13 and degradation determination unit 14 from the information regarding the power consumption amount and the operation mode of facility 60a of the separate freezing and refrigeration showcase stored in facility database 50, and the information regarding the ambient temperature around the outdoor unit of facility 60a of freezing and refrigeration showcase 60 stored in temperature database 70. Hereinafter, this function will be further described in detail.

Here, the ambient temperature around the heat exchanger is exemplified as an outside air temperature as a matter to be considered at the time of degradation determination. As a disturbance other than the outside air temperature, there is a factor that causes a temperature change in the inside of the housing of freezing and refrigeration showcase 60. As such a disturbance, for example, by opening and closing the door of freezing and refrigeration showcase 60 or by newly putting and storing an object in the housing of freezing and refrigeration showcase 60, the power consumption amount increases and becomes a disturbance, which affects the degradation determination of facility 60a. These will be described in second and third exemplary embodiments.

Next, each component of degradation determination device 1 of freezing and refrigeration showcase 60 will be described in more detail.

Degradation determination device 1 may further include input unit 11.

Input unit 11 designates target facility 60a for which degradation determination is performed, a degradation determination reference period for comparing degradation, and a determination period for determining degradation, and inputs the designated periods to data extraction unit 12, and includes a keyboard, a mouse, a touch sensor, a voice input device, or the like. The input information is stored in, for example, facility database 50. In the present specification, the "reference" means a state in which facility 60a is not degraded. For example, the degradation determination reference period means a period such as the first one year or half a year after the installation of facility 60a.

Data extraction unit 12 is a unit that extracts, from the data stored in facility database 50 and temperature database 70, data having a small influence from disturbance other than the ambient temperature among the data regarding the power consumption amount, the operation mode, and the ambient temperature of target facility 60a in the period of the degradation determination reference and the period of the determination, using the state of the operation mode. Here, the extraction of the data having a small influence from disturbance using the state of the operation mode means, for example, extraction of data in an operation mode in which facility 60a is operated in an operation state that requires less power consumption than usual. Data in the degradation determination reference period means degradation determination reference data, and data in the determination period means determination data.

Correlation curve calculation unit 13 is a unit that calculates a correlation curve between the power consumption amount and the ambient temperature for each period with respect to the power consumption amount and the ambient temperature for each of the period of the degradation determination reference and the period of the determination extracted by data extraction unit 12.

Degradation determination unit 14 is a unit that calculates a difference obtained by plotting a curve between the correlation curve of the degradation determination reference data and the correlation curve of the determination data calculated by correlation curve calculation unit 13, and determines degradation, for example, a degradation degree. Here, the degradation degree means, for example, a degree of a power consumption amount increased due to degradation of facility 60a. The degradation degree can be obtained by obtaining a difference between the power consumption amount at the time of determination and the power consumption amount at the time of reference in a predetermined period. Degradation determination device 1 may be, for example, a computer including one or a plurality of processors and a memory connected to the processors. The memory may store a program that implements the functions of data extraction unit 12, correlation curve calculation unit 13, and degradation determination unit 14 when executed.

### [Operation]

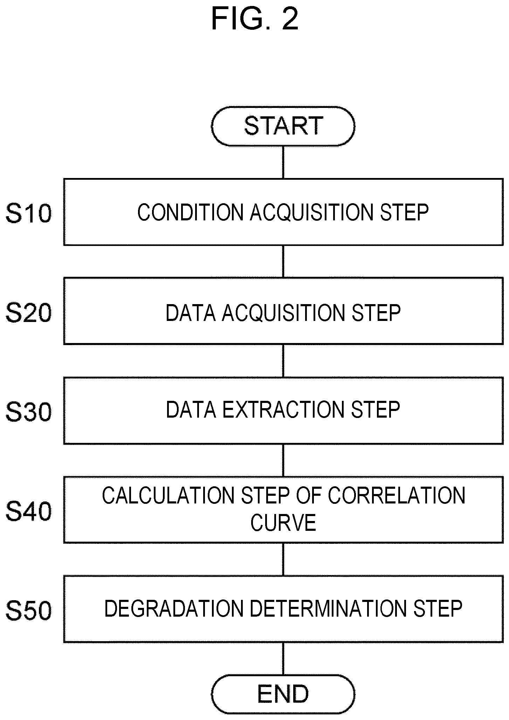

Next, an example of an operation of degradation determination device 1 will be described. Hereinafter, a description will be given with reference to Fig. 2 illustrating an outline of an operation flow.

Degradation determination device 1 stores in facility database 50 and temperature database 70 the power consumption amount, the operation mode, and the ambient temperature at every predetermined time interval or every predetermined time of target facility 60a for which the degradation determination is performed.

First, as first step S10, degradation determination device 1 causes data extraction unit 12 to acquire the degradation determination reference period and the determination period in facility database 50 of target facility 60a for which the degradation determination is performed, the degradation determination reference period and the determination period being designated by input unit 11. As an example, it is assumed that facility 60a of freezing and refrigeration showcase 60 of a separate placement type is set to 5 months from January to May of a certain year as an example of the determination period, and is set to 5 months from January to May, which is two years before the determination period, as an example of the degradation determination reference period, and these periods are input from input unit 11 to data extraction unit 12 and are designated.

Next, in step S20, degradation determination device 1 causes data extraction unit 12 to acquire, from facility database 50 and temperature database 70, a data set including the power consumption amount, the operation mode, and the ambient temperature at each predetermined time interval or each predetermined time in each of the degradation determination reference period and the determination period designated by input unit 11 for target facility 60a. As an example, it is assumed that the power consumption amount, the operation mode, and the ambient temperature every 30 minutes are acquired by data extraction unit 12. For the ambient temperature, data measured by temperature sensor 80 is acquired by data extraction unit 12.

Furthermore, in step S30, degradation determination device 1 causes data extraction unit 12 to extract the power consumption amount and the ambient temperature in an energy-saving operation mode from facility database 50 and temperature database 70 among the power consumption amount, the operation mode, and the ambient temperature acquired in step S20. Here, the energy-saving operation mode refers to an operation mode in which an operation is performed while suppressing power consumption as compared with a normal operation mode, and there is also another name such as an ecological operation.

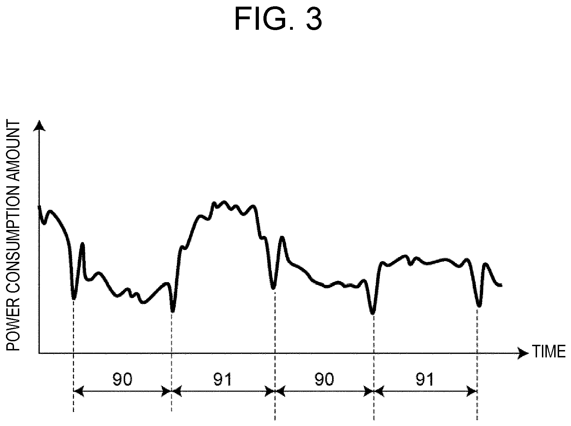

As a specific example, the transition of the power consumption amount in two days is illustrated in Fig. 3. In Fig. 3, section 91 of the power consumption amount in the normal operation mode and section 90 of the power consumption amount in the energy-saving operation mode of facility 60a operated according to an internal temperature of freezing and refrigeration showcase 60 are alternately generated. Here, the internal temperature refers to a temperature inside the housing of freezing and refrigeration showcase 60.

Further, a time zone of the normal operation mode corresponds to the opening hours of a food store where the variation in the internal temperature is large, and a time zone of the energy-saving operation mode corresponds to the closing hours of the food store where the variation in the internal temperature is small. That is, in the time zone of the energy-saving operation mode, a disturbance (example: movement of objects in and out of showcase, or opening and closing of door) other than the outside air temperature is small. Therefore, by extracting the power consumption amount and the ambient temperature in the energy-saving operation mode by data extraction unit 12, data having a small influence from disturbance other than the outside air temperature can be extracted by data extraction unit 12.

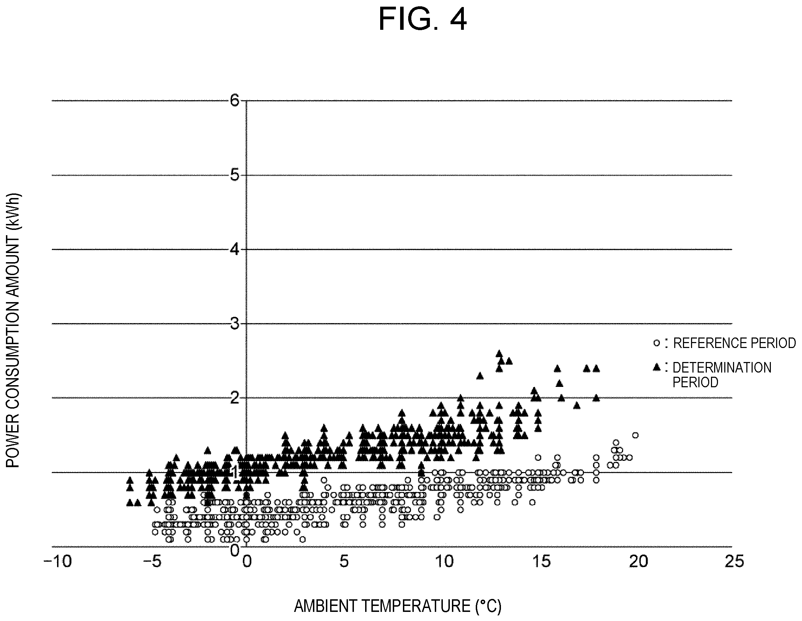

Next, in step S40, degradation determination device 1 causes correlation curve calculation unit 13 to calculate a correlation curve between the power consumption amount and the ambient temperature for each of the period of the degradation determination reference and the period of the determination from the data on the power consumption amount and the ambient temperature (that is, the degradation determination reference data and the determination data) for each of the period of the degradation determination reference and the period of the determination extracted by data extraction unit 12 in step S30. As an example, Fig. 4 illustrates correlation curves (a first correlation curve and a second correlation curve) between the power consumption amount and the ambient temperature for each of the period of the degradation determination reference and the period of the determination calculated by correlation curve calculation unit 13.

Finally, in step S50, degradation determination device 1 causes degradation determination unit 14 to calculate how much a plot difference exists between the first correlation curve in the degradation determination reference period and the second correlation curve in the determination period, which are obtained by correlation curve calculation unit 13, and determines degradation. For example, from the two correlation curves of Fig. 4, it can be determined that facility 60a is degraded assuming that the power consumption amount is approximately twice, in other words, the power consumption amount is degraded twice in the period of the determination as compared with the period of the degradation determination reference. Alternatively, instead of such degradation determination, for example, when the difference in the power consumption amount exceeds a threshold value, it can be determined as degradation.

As described above, according to the first exemplary embodiment, it is possible to determine how much target facility 60a has degraded during the determination period as compared with the degradation determination reference period. That is, for the degradation determination reference data before the degradation determination, data extraction unit 12 extracts data on the power consumption amount and the ambient temperature in an operation mode in which facility 60a is operated in an operation state that required less power consumption than usual, and data extraction unit 12 extracts data on the power consumption amount and the ambient temperature in the operation mode in which facility 60a is operated in the operation state that requires less power consumption than usual for the determination data. By performing the calculation and the determination using the data extracted as described above, it is possible to exclude an increase in the power consumption amount due to the influence of the disturbance that changes the temperature inside the box-shaped housing, and it is possible to correctly determine the degradation of facility 60a by accurately grasping the increase in the power consumption amount due to aging degradation.

In the first exemplary embodiment, as an example, the power consumption amount, the operation mode, and the ambient temperature every 30 minutes are used, but the present invention is not limited thereto. Preferably, from the viewpoint of the load reduction of the data processing and the accuracy of the degradation determination, an example of the predetermined time interval is every 10 to 30 minutes, or an example of the predetermined time is every hour such as 1:00 or 2:00.

Further, in the above example, data extraction unit 12 extracts the energy-saving operation mode as an operation mode. However, the operation mode may be an operation mode in which a change in the internal temperature is small and it is close to the energy-saving operation mode.

Note that, instead of acquiring the information on the operation mode from facility 60a, if there is a section in which an average value of the power consumption amount is lower than a threshold value in the data on the power consumption amount, the section can be acquired as a section of the energy-saving operation mode.

### [Second exemplary embodiment]

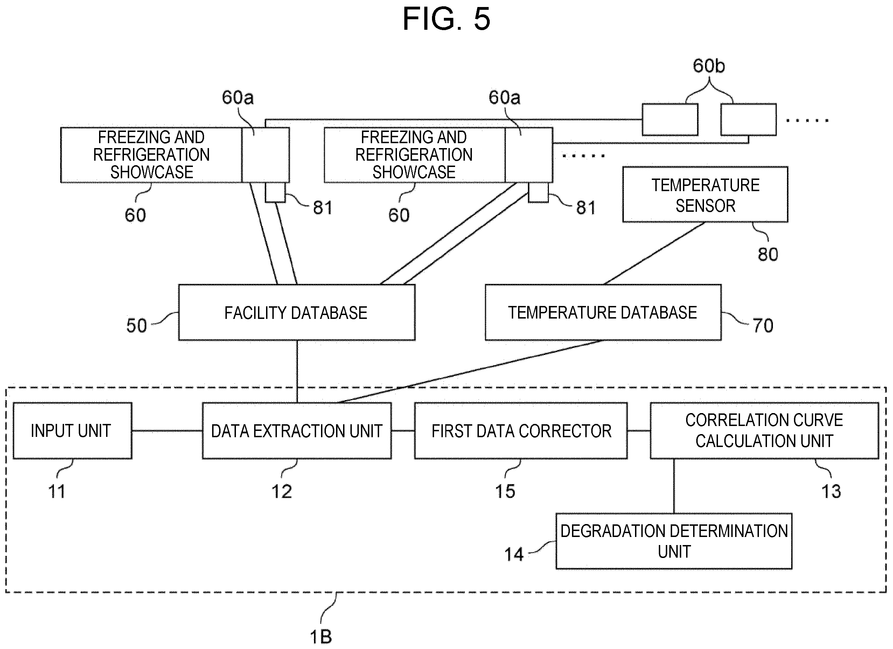

In degradation determination device 1B according to a second exemplary embodiment, as illustrated in Fig. 5, degradation determination device 1B may be configured by providing first data corrector 15 between data extraction unit 12 and correlation curve calculation unit 13.

First data corrector 15 generates a second data set by further excluding data when a defrosting operation is performed from the first data set including the power consumption amount and the ambient temperature extracted by data extraction unit 12 even in the energy-saving operation mode. As a result, it is possible to reduce the influence on the degradation determination due to the increase in the internal temperature of separately installed freezing and refrigeration showcase 60 which is increased by the defrosting operation. Whether an operation mode is the defrosting operation is determined based on whether the operation mode is designated as the defrosting operation mode or whether the operation mode is shifted to the defrosting operation mode based on a change in the power consumption amount.

According to the second exemplary embodiment, in addition to the effect similar to that of the first exemplary embodiment, by excluding the increase data of the power consumption amount due to the defrosting operation from the extracted power consumption amount, only the power consumption amount due to aging degradation can be further extracted, and the degradation determination can be performed with higher accuracy.

### [Third exemplary embodiment]

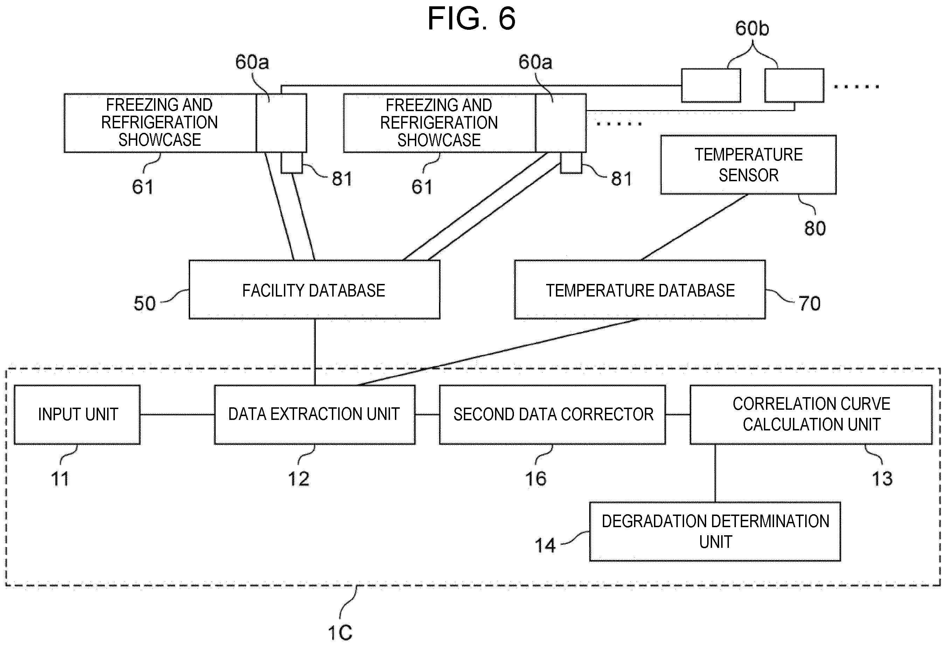

As illustrated in Fig. 6, degradation determination device 1C according to a third exemplary embodiment may configure degradation determination device 1C by providing second data corrector 16 between data extraction unit 12 and correlation curve calculation unit 13 when the degradation determination is performed on freezing and refrigeration showcase 61 with a door.

Second data corrector 16 generates a third data set by further excluding the data (that is, the increase data of the power consumption amount due to the opening of the door) in which the opening and closing door of the cooling chamber to which facility 60a is connected, for example, the door of freezing and refrigeration showcase 61 is opened from the first data set including the power consumption amount and the ambient temperature extracted by data extraction unit 12. As a result, it is possible to reduce the influence on the degradation determination due to the increase in the internal temperature of freezing and refrigeration showcase 61 raised by the opening of the door. Here, whether or not the door of freezing and refrigeration showcase 61 has been opened can be determined based on whether or not the power consumption amount suddenly increases beyond a threshold value.

According to the third exemplary embodiment, in addition to the effect similar to that of the first exemplary embodiment, by excluding the increase data of the power consumption amount due to the opening of the door from the extracted power consumption amount, only the power consumption amount due to aging degradation can be further extracted, and the degradation determination can be performed with higher accuracy.

In the present first to third exemplary embodiments, target facility 60a for which the degradation determination is performed is facility 60a of the separately installed freezing and refrigeration showcase, but the present invention is not limited thereto. The present invention can also be applied to a refrigerator, a freezer, or a freezer built-in freezing and refrigeration showcase. In this case, the ambient temperature of heat exchanger 60b that discharges heat is a temperature inside the facility where facility 60a is installed.

Further, by combining first data corrector 15 of the second exemplary embodiment and second data corrector 16 of the third exemplary embodiment, it is possible to more accurately perform the degradation determination. That is, degradation determination device 1 may generate a fourth data set by removing, from the first data set, the data during the defrosting operation and the data when the opening and closing door of the cooling chamber connected to the cooling facility is opened. Degradation determination device 1 may extract the degradation determination reference data and the determination data from the fourth data set.

According to the present first to third exemplary embodiments described above, it is possible to determine degradation of facility 60a that cools a certain target space and controls the temperature of the target space.

According to the degradation determination method and the degradation determination device of the aspect of the present invention, the increase in the power consumption amount due to the influence of the disturbance that changes the temperature in the box-shaped housing can be excluded, and the degradation of the facility can correctly be determined by grasping the increase in the power consumption amount due to the aging degradation.

Note that, when any exemplary embodiments or modifications are appropriately combined in the various exemplary embodiments or modifications described above, the effect possessed by each of them can be achieved. Additionally, the exemplary embodiments can be combined with each other, the examples can be combined with each other, or the exemplary embodiment and the example can be combined, and features in the different exemplary embodiments, or in the different examples, also can be combined with each other.

The degradation determination method and the degradation determination device according to the aspect of the present invention can correctly determine the degradation degree of the facility by extracting a range in which the influence of disturbance is small among the power consumption amount and the outdoor temperature, and can be used for facility environment improvement such as facility maintenance or facility update.

## Claims

1. A degradation determination method of determining degradation of a cooling facility that cools an inside of a box-shaped housing (60), the degradation determination method comprising:
extracting degradation determination reference data before degradation determination and determination data from a first data set including a power consumption amount of the cooling facility and an ambient temperature of a heat exchanger (60b) that discharges heat to an outside of the cooling facility acquired at each predetermined time interval or at each predetermined time, the degradation determination reference data including a power consumption amount and an ambient temperature in an energy-saving operation mode referring to an operation mode in which an operation is performed while suppressing power consumption as compared with a normal operation mode, the determination data including a power consumption amount and an ambient temperature in the energy-saving operation mode, whereby data having a small influence from disturbance other than the outside air temperature is extracted;
calculating, from the power consumption amount and the ambient temperature of the degradation determination reference data, a first correlation curve indicating a correlation between the power consumption amount and the ambient temperature, and calculating, from the power consumption amount and the ambient temperature of the determination data, a second correlation curve indicating a correlation between the power consumption amount and the ambient temperature; and
determining degradation of the cooling facility based on a difference between the first correlation curve and the second correlation curve.

2. The degradation determination method according to Claim 1, further comprising generating a second data set by excluding data during a defrosting operation from the first data set,
wherein
the degradation determination reference data is extracted from the second data set, and
the determination data is extracted from the second data set.

3. The degradation determination method according to Claim 1, further comprising generating a third data set by removing, from the first data set, data when an opening and closing door of a cooling chamber connected to the cooling facility is opened,
wherein
the degradation determination reference data is extracted from the third data set, and
the determination data is extracted from the third data set.

4. The degradation determination method according to Claim 1, further comprising generating a fourth data set by removing, from the first data set, data during a defrosting operation and data when an opening and closing door of a cooling chamber connected to the cooling facility is opened,
wherein
the degradation determination reference data is extracted from the fourth data set, and
the determination data is extracted from the fourth data set.

5. A degradation determination device (1) that determines degradation of a cooling facility that cools an inside of a box-shaped housing (60), the degradation determination device (1) comprising:
a data extraction unit (12) that extracts degradation determination reference data before degradation determination and determination data from a first data set including a power consumption amount of the cooling facility and an ambient temperature of a heat exchanger (60b) that discharges heat to an outside of the cooling facility acquired at each predetermined time interval or at each predetermined time, the degradation determination reference data including a power consumption amount and an ambient temperature in an energy-saving operation mode referring to an operation mode in which an operation is performed while suppressing power consumption as compared with a normal operation mode, the determination data including a power consumption amount and an ambient temperature in the energy-saving operation mode , whereby data having a small influence from disturbance other than the outside air temperature is extracted;
a correlation curve calculation unit (13) that calculates, from the power consumption amount and the ambient temperature of the degradation determination reference data, a first correlation curve indicating a correlation between the power consumption amount and the ambient temperature, and calculates, from the power consumption amount and the ambient temperature of the determination data, a second correlation curve indicating a correlation between the power consumption amount and the ambient temperature; and
a degradation determination unit (14) that determines degradation of the cooling facility based on a difference between the first correlation curve and the second correlation curve.

6. The degradation determination device (1) according to Claim 5, wherein the data extraction unit (12) generates a second data set by excluding data during a defrosting operation from the first data set, extracts the degradation determination reference data from the second data set, and extracts the determination data from the second data set.

7. The degradation determination device (1) according to Claim 5, wherein the data extraction unit (12) generates a third data set by removing, from the first data set, data when an opening and closing door of a cooling chamber connected to the cooling facility is opened, and extracts the degradation determination reference data and the determination data from the third data set.

8. The degradation determination device (1) according to Claim 5, wherein the data extraction unit (12) generates a fourth data set by removing, from the first data set, data during a defrosting operation and data when an opening and closing door of a cooling chamber connected to the cooling facility is opened, and extracts the degradation determination reference data and the determination data from the fourth data set.

## Patentansprüche

1. Verschlechterungsbestimmungsverfahren zum Bestimmen einer Verschlechterung einer Kühlanlage, die eine Innenseite eines kastenförmigen Gehäuses (60) kühlt, wobei das Verschlechterungsbestimmungsverfahren Folgendes umfasst:
Extrahieren von Verschlechterungsbestimmungsreferenzdaten vor einer Verschlechterungsbestimmung und von Bestimmungsdaten aus einem ersten Datensatz, der eine Stromverbrauchsmenge der Kühlanlage und eine Umgebungstemperatur eines Wärmetauschers (60b) beinhaltet, der Wärme zu einer Außenseite der Kühlanlage abgibt, die bei jedem vorbestimmten Zeitintervall oder zu jeder vorbestimmten Zeit erfasst wird, wobei die Verschlechterungsbestimmungsreferenzdaten eine Stromverbrauchsmenge und eine Umgebungstemperatur in einem energiesparenden Betriebsmodus beinhalten, der einen Betriebsmodus betrifft, bei dem ein Betrieb durchgeführt wird, während ein Stromverbrauch unterdrückt wird, verglichen mit einem normalen Betriebsmodus, wobei die Bestimmungsdaten eine Stromverbrauchsmenge und eine Umgebungstemperatur im energiesparenden Betriebsmodus beinhalten, wodurch Daten, die einen kleinen Einfluss von einer anderen Störung als der Außenlufttemperatur aufweisen, extrahiert werden;
Berechnen einer ersten Korrelationskurve, die eine Korrelation zwischen der Stromverbrauchsmenge und der Umgebungstemperatur anzeigt, aus der Stromverbrauchsmenge und der Umgebungstemperatur der Verschlechterungsbestimmungsreferenzdaten und Berechnen einer zweiten Korrelationskurve, die eine Korrelation zwischen der Stromverbrauchsmenge und der Umgebungstemperatur anzeigt, aus der Stromverbrauchsmenge und der Umgebungstemperatur der Bestimmungsdaten; und
Bestimmen einer Verschlechterung der Kühlanlage auf Basis einer Differenz zwischen der ersten Korrelationskurve und der zweiten Korrelationskurve.

2. Verschlechterungsbestimmungsverfahren nach Anspruch 1, das ferner das Erzeugen eines zweiten Datensatzes durch Ausschließen von Daten während einer Entfrostungsoperation aus dem ersten Datensatz, umfasst,
wobei
die Verschlechterungsbestimmungsreferenzdaten aus dem zweiten Datensatz extrahiert werden, und
die Bestimmungsdaten aus dem zweiten Datensatz extrahiert werden.

3. Verschlechterungsbestimmungsverfahren nach Anspruch 1, das ferner das Erzeugen eines dritten Datensatzes durch Entfernen von Daten aus dem ersten Datensatz, wenn eine öffnende und schließende Tür einer Kühlkammer, die mit der Kühlanlage verbunden ist, geöffnet wird, umfasst,
wobei
die Verschlechterungsbestimmungsreferenzdaten aus dem dritten Datensatz extrahiert werden, und
die Bestimmungsdaten aus dem dritten Datensatz extrahiert werden.

4. Verschlechterungsbestimmungsverfahren nach Anspruch 1, das ferner das Erzeugen eines vierten Datensatzes durch Entfernen von Daten während einer Entfrostungsoperation aus dem ersten Datensatz, wenn eine öffnende und schließende Tür einer Kühlkammer, die mit der Kühlanlage verbunden ist, geöffnet wird, umfasst,
wobei
die Verschlechterungsbestimmungsreferenzdaten aus dem vierten Datensatz extrahiert werden, und
die Bestimmungsdaten aus dem vierten Datensatz extrahiert werden.

5. Verschlechterungsbestimmungsvorrichtung (1) die eine Verschlechterung einer Kühlanlage bestimmt, die eine Innenseite eines kastenförmigen Gehäuses (60) kühlt, wobei die Verschlechterungsbestimmungsvorrichtung (1) Folgendes umfasst:
eine Datenextraktionseinheit (12), die Verschlechterungsbestimmungsreferenzdaten vor einer Verschlechterungsbestimmung und Bestimmungsdaten aus einem ersten Datensatz extrahiert, der eine Stromverbrauchsmenge der Kühlanlage und eine Umgebungstemperatur eines Wärmetauschers (60b) beinhaltet, der Wärme zu einer Außenseite der Kühlanlage abgibt, die bei jedem vorbestimmten Zeitintervall oder zu jeder vorbestimmten Zeit erfasst wird, wobei die Verschlechterungsbestimmungsreferenzdaten eine Stromverbrauchsmenge und eine Umgebungstemperatur in einem energiesparenden Betriebsmodus beinhalten, der einen Betriebsmodus betrifft, bei dem ein Betrieb durchgeführt wird, während ein Stromverbrauch unterdrückt wird, verglichen mit einem normalen Betriebsmodus, wobei die Bestimmungsdaten eine Stromverbrauchsmenge und eine Umgebungstemperatur im energiesparenden Betriebsmodus beinhalten, wodurch Daten, die einen kleinen Einfluss von einer anderen Störung als der Außenlufttemperatur aufweisen, extrahiert werden;
eine Korrelationskurvenberechnungseinheit (13), die eine erste Korrelationskurve, die eine Korrelation zwischen der Stromverbrauchsmenge und der Umgebungstemperatur anzeigt, aus der Stromverbrauchsmenge und der Umgebungstemperatur der Verschlechterungsbestimmungsreferenzdaten berechnet und eine zweite Korrelationskurve, die eine Korrelation zwischen der Stromverbrauchsmenge und der Umgebungstemperatur anzeigt, aus der Stromverbrauchsmenge und der Umgebungstemperatur der Bestimmungsdaten berechnet; und
eine Verschlechterungsbestimmungseinheit (14), die eine Verschlechterung der Kühlanlage auf Basis einer Differenz zwischen der ersten Korrelationskurve und der zweiten Korrelationskurve bestimmt.

6. Verschlechterungsbestimmungsvorrichtung (1) nach Anspruch 5, wobei die Datenextraktionseinheit (12) durch Ausschließen von Daten während einer Entfrostungsoperation aus dem ersten Datensatz einen zweiten Datensatz erzeugt, die Verschlechterungsbestimmungsreferenzdaten aus dem zweiten Datensatz extrahiert und die Bestimmungsdaten aus dem zweiten Datensatz extrahiert.

7. Verschlechterungsbestimmungsvorrichtung (1) nach Anspruch 5, wobei die Datenextraktionseinheit (12) durch Entfernen von Daten aus dem ersten Datensatz einen dritten Datensatz erzeugt, wenn eine öffnende und schließende Tür einer Kühlkammer, die mit der Kühlanlage verbunden ist, geöffnet wird, und die Verschlechterungsbestimmungsreferenzdaten und die Bestimmungsdaten aus dem dritten Datensatz extrahiert.

8. Verschlechterungsbestimmungsvorrichtung (1) nach Anspruch 5, wobei die Datenextraktionseinheit (12) durch Entfernen von Daten während einer Entfrostungsoperation aus dem ersten Datensatz einen vierten Datensatz erzeugt, wenn eine öffnende und schließende Tür einer Kühlkammer, die mit der Kühlanlage verbunden ist, geöffnet wird, und die Verschlechterungsbestimmungsreferenzdaten und die Bestimmungsdaten aus dem vierten Datensatz extrahiert.

## Revendications

1. Procédé de détermination de dégradation pour déterminer une dégradation d'une installation de refroidissement qui refroidit un intérieur d'un boîtier (60) en forme de boîte, le procédé de détermination de dégradation comprenant :
l'extraction de données de référence de détermination de dégradation avant la détermination de dégradation et de données de détermination à partir d'un premier ensemble de données comportant une quantité de consommation de puissance de l'installation de refroidissement et une température ambiante d'un échangeur de chaleur (60b) qui décharge la chaleur vers un extérieur de l'installation de refroidissement acquise à chaque intervalle de temps prédéterminé ou à chaque moment prédéterminé, les données de référence de détermination de dégradation comportant une quantité de consommation de puissance et une température ambiante dans un mode de fonctionnement économe en énergie faisant référence à un mode de fonctionnement dans lequel une opération est effectuée tout en supprimant une consommation de puissance en comparaison avec un mode de fonctionnement normal, les données de détermination comportant une quantité de consommation de puissance et une température ambiante dans le mode de fonctionnement économe en énergie, les données à faible influence de perturbations autres que la température de l'air extérieur étant extraites ;
le calcul d'une première courbe de corrélation indiquant une corrélation entre la quantité de consommation de puissance et la température ambiante à partir de la quantité de consommation de puissance et de la température ambiante des données de référence de détermination de dégradation, et le calcul d'une deuxième courbe de corrélation indiquant une corrélation entre la quantité de consommation de puissance et la température ambiante à partir de la quantité de consommation de puissance et de la température ambiante des données de détermination ; et
la détermination d'une dégradation de l'installation de refroidissement sur la base d'une différence entre la première courbe de corrélation et la deuxième courbe de corrélation.

2. Procédé de détermination de dégradation selon la revendication 1, comprenant en outre la génération d'un deuxième ensemble de données en excluant du premier ensemble de données des données au cours d'une opération de dégivrage,
dans lequel
les données de référence de détermination de dégradation sont extraites du deuxième ensemble de données, et
les données de détermination sont extraites du deuxième ensemble de données.

3. Procédé de détermination de dégradation selon la revendication 1, comprenant en outre la génération d'un troisième ensemble de données en retirant du premier ensemble de données des données lorsqu'une porte d'ouverture et de fermeture d'une chambre de refroidissement connectée à l'installation de refroidissement est ouverte,
dans lequel
les données de référence de détermination de dégradation sont extraites du troisième ensemble de données, et
les données de détermination sont extraites du troisième ensemble de données.

4. Procédé de détermination de dégradation selon la revendication 1, comprenant en outre la génération d'un quatrième ensemble de données en retirant du premier ensemble de données des données au cours d'une opération de dégivrage et des données lorsqu'une porte d'ouverture et de fermeture d'une chambre de refroidissement connectée à l'installation de refroidissement est ouverte,
dans lequel
les données de référence de détermination de dégradation sont extraites du quatrième ensemble de données, et
les données de détermination sont extraites du quatrième ensemble de données.

5. Dispositif de détermination de dégradation (1) qui détermine une dégradation d'une installation de refroidissement qui refroidit un intérieur d'un boîtier (60) en forme de boîte, le dispositif de détermination de dégradation (1) comprenant :
une unité d'extraction de données (12) qui extrait des données de référence de détermination de dégradation avant la détermination de dégradation et des données de détermination à partir d'un premier ensemble de données comportant une quantité de consommation de puissance de l'installation de refroidissement et une température ambiante d'un échangeur de chaleur (60b) qui décharge la chaleur vers un extérieur de l'installation de refroidissement acquise à chaque intervalle de temps prédéterminé ou à chaque moment prédéterminé, les données de référence de détermination de dégradation comportant une quantité de consommation de puissance et une température ambiante dans un mode de fonctionnement économe en énergie faisant référence à un mode de fonctionnement dans lequel une opération est effectuée tout en supprimant une consommation de puissance en comparaison avec un mode de fonctionnement normal, les données de détermination comportant une quantité de consommation de puissance et une température ambiante dans le mode de fonctionnement économe en énergie , les données à faible influence de perturbations autres que la température de l'air extérieur étant extraites ;
une unité de calcul de courbe de corrélation (13) qui calcule une première courbe de corrélation indiquant une corrélation entre la quantité de consommation de puissance et la température ambiante à partir de la quantité de consommation de puissance et de la température ambiante des données de référence de détermination de dégradation, et qui calcule une deuxième courbe de corrélation indiquant une corrélation entre la quantité de consommation de puissance et la température ambiante à partir de la quantité de consommation de puissance et de la température ambiante des données de détermination ; et
une unité de détermination de dégradation (14) qui détermine une dégradation de l'installation de refroidissement sur la base d'une différence entre la première courbe de corrélation et la deuxième courbe de corrélation.

6. Dispositif de détermination de dégradation (1) selon la revendication 5, dans lequel l'unité d'extraction de données (12) génère un deuxième ensemble de données en excluant du premier ensemble de données des données au cours d'une opération de dégivrage, extrait les données de référence de détermination de dégradation à partir du deuxième ensemble de données, et extrait les données de détermination à partir du deuxième ensemble de données.

7. Dispositif de détermination de dégradation (1) selon la revendication 5, dans lequel l'unité d'extraction de données (12) génère un troisième ensemble de données en retirant du premier ensemble de données des données lorsqu'une porte d'ouverture et de fermeture d'une chambre de refroidissement connectée à l'installation de refroidissement est ouverte, et extrait les données de référence de détermination de dégradation et les données de détermination à partir du troisième ensemble de données.

8. Dispositif de détermination de dégradation (1) selon la revendication 5, dans lequel l'unité d'extraction de données (12) génère un quatrième ensemble de données en retirant du premier ensemble de données des données au cours d'une opération de dégivrage et des données lorsqu'une porte d'ouverture et de fermeture d'une chambre de refroidissement connectée à l'installation de refroidissement est ouverte, et extrait les données de référence de détermination de dégradation et les données de détermination à partir du quatrième ensemble de données.
